# EUROPEAN PATENT APPLICATION

(11) **EP 2 070 823 A1**
(43) Date of publication of application: **17.06.2009**
(21) Application number: 08380295.9
(22) Date of filing: 17.10.2008
(51) Int. Cl.: B65B 35/54, B65D 85/57, G11B 23/03

(54) **Publication insert optical disc carrier device**

(30) Priority: 19.10.2007 ES 200702206 U
(71) Applicant: Encuny, S.L., 08840 Viladecans (Barcelona) (ES)
(72) Inventor: Salazar, Ricard Xavier Rodriguez, 08840 Viladecans (Barcelona) (ES)
(74) Representative: Gonzalez Gonzalez, Pablo

(57) **Abstract**

This carrier device is comprised of a rectangular sheet (1) where at least two pairs of portions (4, 5), overlapping and joined together by means of glue lines (7, 8), that delimit a compartment (9) of smaller surface area than the portions (4, 5) for housing the corresponding optical disc (10) by themselves or jointly with the folding line (2), are delimited by means of folding lines (2); each compartment (9) having an upper mouth (11) fitted with reusable closing means (41, 51) for the introduction and extraction of the optical disc (10).

## Description

### OBJECT OF THE INVENTION

The present invention relates to a carrier device for inserting optical discs in publications.

### BACKGROUND OF THE INVENTION

At present, the inclusion of optical discs such as audio compact discs, discs containing software applications or video DVDs, among others, in magazines and publications is becoming an increasingly frequent practice. The inclusion of these discs is complicated, as they cannot be easily attached to the structure of pages adhered to the spine of the magazine.

In some cases, the optical disc with its corresponding sleeve and the magazine or publication in question are externally closed by means of a retractable or heat-sealed transparent bag. The problem with this type of presentation is that, if the bag opens or becomes deteriorated, the disc can fall out and become lost.

Another presentation comprises an envelope having a front side and back side formed by a sheet folded along a transverse centre folding line, which delimits an inner cavity, closed at its bottom end by the transverse folding line, and laterally closed by means of glued tabs and having an upper mouth, occluded by closing means. This envelope enables the insertion of a disc in a binding, and prevents the magazine from shrinking, but once the access mouth, which is sealed by means of an adhesive, is opened it cannot house the compact disc securely.

Additionally, the envelope is difficult to bind as it is twice as thick as a conventional bound page and occupies a significantly smaller surface area than the flat surface area of the publication, resulting in an irregular layout on turning the pages.

Another presentation used is the adhesion of a flexible plastic cover to one of the normal pages of the magazine binding. However, this cover must be added using unconventional binding means, which raises costs and complicates edition, thereby limiting this practice to the edition of high-priced books which can support said plastic cover on the inner sides of their covers.

### DESCRIPTION OF THE INVENTION

The publication insert optical disc carrier device, which is the object of this invention, has constructive peculiarities aimed at allowing the formation, with a single page, of at least one suitable compartment for retaining optical discs without the possibility of displacement along the rest of the carrier device which, in its use position, has analogous dimensions to the format of the publication in question, thereby allowing the insertion of the carrier device in the magazine or publication as if it were another page thereof.

According to the invention, this carrier device is comprised of a rectangular sheet where dimensions analogous to the format of the publication, overlapping and joined together by means of at least two glue lines which delimit, by themselves or jointly with one of the folding lines, a compartment of smaller surface area than that of said overlapping portions for housing an optical disc, are delimited by means of folding lines of at least one pair of portions; said compartment having an upper mouth fitted with reusable closing means for the introduction and extraction of the optical disc.

In an embodiment of the invention, said sheet is comprised of a folding line which, together with the aforementioned folding lines, delimits two overlapping pairs of portions joined together by means of folding lines, whereby in this case the carrier device has a double configuration, that is, with two compartments for optical discs.

In a variant of this embodiment, said additional folding line delimits the pair of portions that form a compartment for optical discs and a portion of the sheet that comprises a folding cover.

In accordance with the invention, at least one of the glue lines that joins the pairs of portions that form a compartment is positioned vertically and is significantly equal in length to the height of the sheet. This glue line laterally delimits the optical disc housing compartment, thereby preventing the lateral displacement of the optical disc, when the width of the carrier device is significantly greater than the compartment designed to contain the optical disc.

According to the invention, at least one of the glue lines that join the pairs of portions that form a compartment is disposed underneath the respective compartment, forming a termination that limits the displacement of the optical disc towards the interior of the carrier device. Said glue line is positioned vertically and is significantly centered, along a vertical direction, with respect to said compartment, preventing the disc from slipping through the lower part of the carrier device.

The definition of compartment for optical discs, by means of the glue lines of the overlapping portions of the sheet, in addition to having a high constructive simplicity, avoids the use of additional folds that can give the carrier device excessive thickness, particularly when said carrier device is going to be inserted in magazines and other similar publications.

According to the invention, the reusable closing means disposed on the upper mouth of each of the compartments form a recess and die-cut closing tab, facing each other and defined in the upper edge of the overlapping portions.

### DESCRIPTION OF THE FIGURES

In order to complement this description and for the purpose of further explaining the characteristics of the invention, a set of plans have been included with this specification, as an integral part thereof, in which the following has been represented in an illustrative and non-limitative manner:
- Fig. 1: Shows a perspective view of an example of embodiment of the publication insert optical disc carrier device, fully assembled, defining two compartments for optical discs.
- Fig. 2: Shows a plan view of the sheet in an unfolded state, based on which the carrier device of figure 1 is formed.
- Fig. 3: Shows a schematic view of the assembly of the carrier device of figure 1 with the sheet of figure 2.
- Fig. 4: Shows a perspective view of an embodiment version of the publication insert optical disc carrier device, fully assembled, defining a single compartment.
- Fig. 5: Shows a plan view of the sheet that forms the carrier device of figure 2 in an unfolded state.
- Fig. 6: Shows a perspective view of an embodiment version of the publication insert optical disc carrier device, fully assembled, defining a single compartment and a folding cover.
- Fig. 7: Shows a plan view of the sheet that forms the carrier device of figure 6 in an unfolded state.

### PREFERRED EMBODIMENT OF THE INVENTION

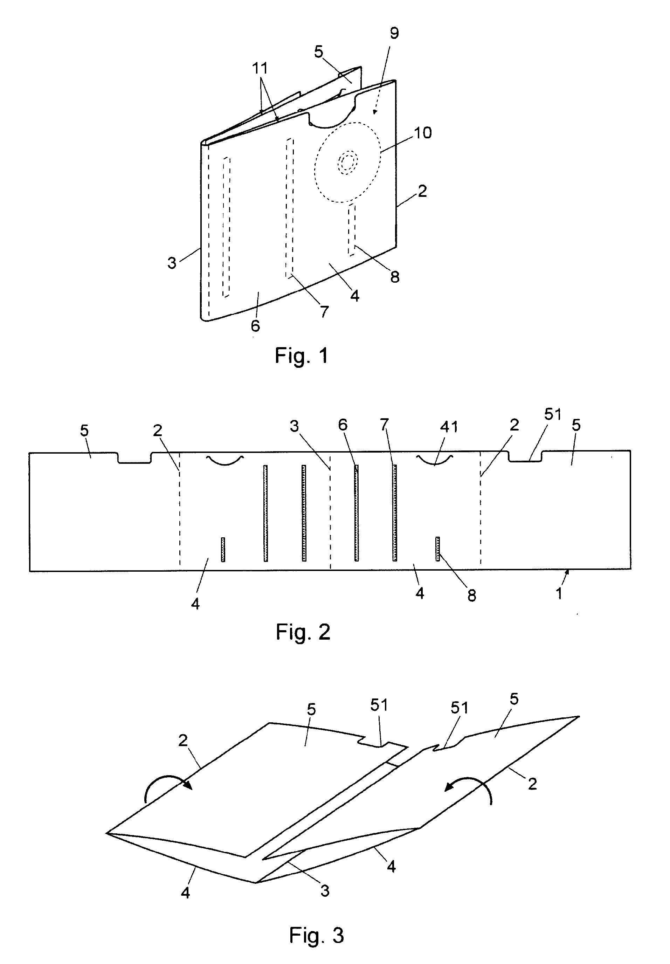

In the example of embodiment shown in figures 1 to 3, the publication insert optical disc carrier device is formed by a rectangular sheet (1) wherein two intermediate portions (4) and two end portions (5) are delimited by means of folding lines (2, 3), the surface of each of said portions (4, 5) being analogous to the format of the magazine or publication in which the carrier device will be inserted.

The folding of the end portions (5) along the folding lines (2) determines that said end portions (5) overlap the respective intermediate portions (4), fixing each of the end portions (5) to the corresponding intermediate portion (4) by means of glue lines (6, 7 and 8), all of which are vertical in this case.

In its assembly position, a compartment (9) for housing the corresponding optical disc (10) is defined between each pair of intermediate (4) and end (5) portions.

Each of the compartments (9) is laterally delimited by the glue line (7) and by the folding line (2), which prevents the lateral displacement of the optical disc (10).

The glue line (8) disposed underneath the compartment (9) prevents the optical disc from being displaced towards the bottom and slipping through the lower end of the carrier device.

The glue line (6) is in charge of fixing the free end of the end portion (5) on the corresponding intermediate portion (4).

Each of the compartments (9) has an upper mouth (11) for the introduction and extraction of the optical disc (10). Each of the mouths (11) has reusable closing means represented in this example of embodiment by a recess (51), defined in the upper end of the end portion (5), and by a die-cut closing tab (41) in the corresponding intermediate portion (4).

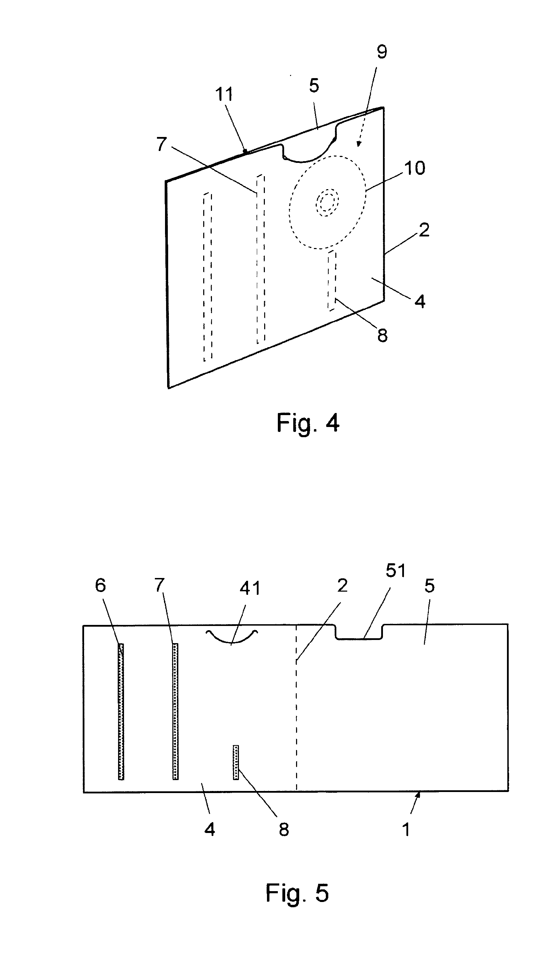

In the embodiment version shown in figures 4 and 5 of the optical disc carrier device, the sheet (1) has a single folding line (2) that delimits two overlapping portions (4, 5) fastened together by glue lines (7, 8) analogous to those of the prior embodiment, the carrier device having in this case a single compartment (9) for the positioning of an optical device. In this embodiment, the carrier device has identical characteristics to those of any of the halves of the embodiment shown in figure 1, which form a single compartment (9).

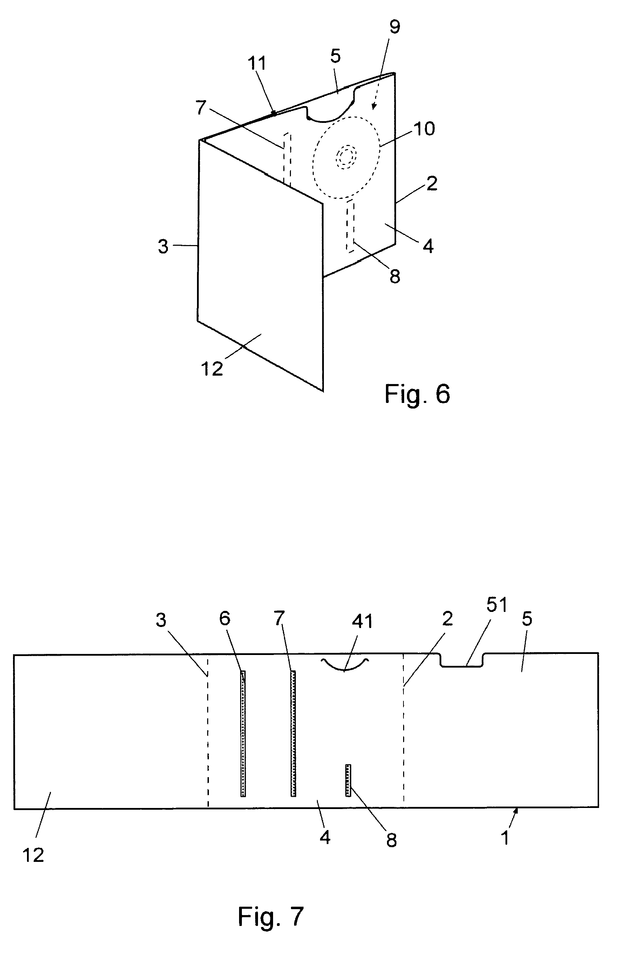

In the embodiment version shown in figures 6 and 7, the sheet (1) has a first folding line (2) that delimits two portions (4, 5) which, conveniently overlapped and joined together along the glue lines (7, 8), form a compartment (9) for housing an optical disc, and a folding line (3) which delimits a portion (12) forming a folding cover.

Having sufficiently described the nature of the invention, in addition to an example of preferred embodiment, we hereby state for the appropriate purposes that the materials, shapes, size and disposition of the element described can be modified, provided that it does not represent an alteration of the essential characteristics of the invention, which are claimed below.

## Claims

1. Publication insert optical disc carrier device; **characterised in that** it is comprised of a rectangular sheet (1) where at least one pair of portions (4, 5) with dimensions analogous to the format of the publication in question are delimited by means of folding lines (2); said portions (4, 5) overlap and are joined together by at least two glue lines (7, 8) which delimit, by themselves or jointly with the folding line (2), a compartment (9) of smaller surface area than the portions (4, 5) for housing the corresponding optical disc (10); each compartment (9) presenting an upper mouth (11) fitted with reusable closing means (41, 51) for the introduction and extraction of the optical disc (10).

2. Carrier device according to claim 1, **characterised in that** the sheet is comprised of a folding line (3) that delimits jointly with the folding lines (2): two intermediate portions (4) and two overlapping end portions (5) fastened together on the adjacent portions (4) by means of the glue lines (7, 8); said pairs of portions (4, 5) forming compartments (9) for housing optical discs (10).

3. Carrier device according to claim 1, **characterised in that** the sheet (1) is comprised of a line (3) that delimits jointly with the folding lines (2): a pair of portions (4, 5) that form a compartment (9) for an optical disc (10) and portion (12) that forms a folding cover.

4. Carrier device according to any of the foregoing claims, **characterised in that** at least one of the glue lines (7) that join the pair of portions (4, 5) which form a compartment for optical discs is significantly equal in length to the height of the sheet (1) and laterally delimits said compartment (9), thereby preventing the lateral displacement of the optical disc (10).

5. Carrier device according to any of the foregoing claims, **characterised in that** at least one of the glue lines (8) is disposed underneath the respective compartment (9) that houses the optical disc (10); said glue line (8) forming a termination that impedes the displacement of the optical disc towards the bottom.

6. Carrier device, according to claim 5, **characterised in that** the glue line (8) is positioned vertically and is significantly centred along a vertical direction with respect to said compartment (9).

7. Carrier device according to any of the preceding claims, **characterised in that** the reusable closing means of the upper mouth (11) of each of the compartments (9) comprise a die-cut closing tab (41) and a recess (51), facing each other and defined at the upper end of the portions (4, 5).
